# EUROPEAN PATENT SPECIFICATION

(11) **EP 0 407 765 B1**
(45) Date of publication and mention of the grant of the patent: **22.09.1993**
(21) Application number: 90111465.2
(22) Date of filing: 18.06.1990
(51) Int. Cl.: F02F 11/00, F16J 15/12

(54) **Head gasket with sealing rings having multi-stage compressibility**
Zylinderkopfabdichtung mit Abdichtungen mit Mehrstufen-Kompressibilität
Dispositif d'étanchéité pour une culasse comprenant des bagues d'étanchéite ayant une compressibilité à étapes multiples

(30) Priority: 13.07.1989 US 379059
(43) Date of publication of application: 16.01.1991
(73) Proprietor: FEL-PRO INCORPORATED, Skokie Illinois 60076 (US)
(72) Inventor: Pearlstein, Robert S., Northbrook, Illinois 60062-7633 (US)
(74) Representative: Strehl Schübel-Hopf Groening & Partner

(56) References cited:
- FR-A- 2 569 456
- GB-A- 2 097 872
- US-A- 4 369 980

## Description

The present invention is related to an automotive head gasket sealing assembly adapted to be disposed between the head and block of an automotive engine, said assembly comprising a generally flat, expansive main gasket body defining at least two combustion openings to be disposed in line with engine combustion chambers, and combustion sealing means for each combustion opening, each said combustion sealing means comprising a metallic annular seal ring of solid cross-section, said seal ring being formed separately from the gasket body and being positioned within said combustion opening to sealingly circumscribe said combustion chamber. A head gasket sealing assembly of this type is known from US-A-4,369,980.

Said cylinder head gasket including a body defining a cylinder opening, a fire ring received in said opening including a radially inner sealing hoop compressively deformed to form a seal between said cylinder head and said< cylinder sleeve, a radially outer and reinforcing hoop disposed between said sealing hoop and the body of said gasket pressing radially inward against said inner sealing hoop, a metal wrap enclosing said hoops and fastened to the body of said gasket and compressively sealed with said cylinder head and cylinder block to thereby provide a sealing gasket assembly.

GB-A-2 097 872 discloses a cylinder head gasket comprising a pair of outer metal plates having outwardly directed corrugations formed therein away from cylinder bore openings. A composite metal spacer plate is disposed between the plates and has a central soft metal layer and hard metal surface layers bonded or integral therewith. The metal spacer plate extends into proximity with the individual cylinder bore openings and is formed adjacent these openings on each axial face with circumferential serrations of V-shaped radial profile. The thickness of the spacer plate measured over the peaks of the serrations before the gasket is installed is somewhat greater than that of the remainder of the spacer plate whilst the thickness measured between the troughs of the serrations is significantly less than that of the remainder of the spacer plate.

A wide range of concerns face the gasket designer, particularly with today's lighter weight engines, and with engines fabricated from materials and masses of material which are much more prone to distortion in operation than were the conventional engines and materials of ten, twenty and thirty years ago. Today those circumstances and conditions such as thermal push present serious problems in designing effective combustion seals. Other circumstances, such as possible bore distortion resulting from gasket design, must also be taken into consideration.

Thus, improved designs for head gaskets and for mechanisms for effectively sealing at combustion openings are actively sought after.

In accordance with the present invention an improved automotive head gasket sealing assembly adapted to be disposed between the head and block of an automotive engine is provided. The improvement is characterized in that said combustion sealing means is a multi-stage combustion sealing means formed from drawn wire with butt-connected ends and comprising an integral pair of metallic annular seal ring sections of solid cross section which are positioned within said combustion opening to sealingly circumscribe said combustion chamber, one of said metallic annular seal ring sections lying radially inwardly of the other, a first ring section being radially deformable and compressible and having a vertical dimension greater than that of a second ring section, said first ring section providing an initial compressible seal, said second ring section being less radially deformable and compressible in use and providing both a secondary seal and resistance to thermal push in use.

In a preferred form, the first section lies radially inwardly of the second section and is generally circular in radial cross-section. Alternatively, the section of the ring with the greater vertical dimension may lie radially outward of the thinner section. In another form, the first section is generally wedge-shaped in radial cross-section.

Preferably the ring is formed of drawn wire, the ends of which are butt-connected.

Further objects, features and advantages of the present invention will become apparent from the following drawing and description.

### Brief Description of The Drawings

Figure 1 is a plan view of a typical head gasket assembly employing the principles of the present invention;
Figure 2 is a section taken substantially along line 2-2 of Figure 1 with the gasket in place between a head and a block of an engine and ready to be compressed therebetween into sealing engagement therewith;
Figure 3 is an enlarged plan view of the seal ring of Figure 2;
Figure 4 is an enlarged cross-sectional view taken substantially along line 4-4 of Figure 3;
Figure 5 is a load deflection graph comparing the load deflection of a typical round wire and of a seal ring of the present invention;
Figure 6 is an enlarged plan view of an alternative seal ring of the present invention;
Figure 7 is an enlarged cross-sectional view taken substantially along line 7-7 of Figure 6;
Figure 8 is an enlarged plan view of a further seal ring of the present invention; and
Figure 9 is an enlarged cross-sectional view taken substantially along line 9-9 of Figure 8.

### Description of Presently Preferred Embodiments

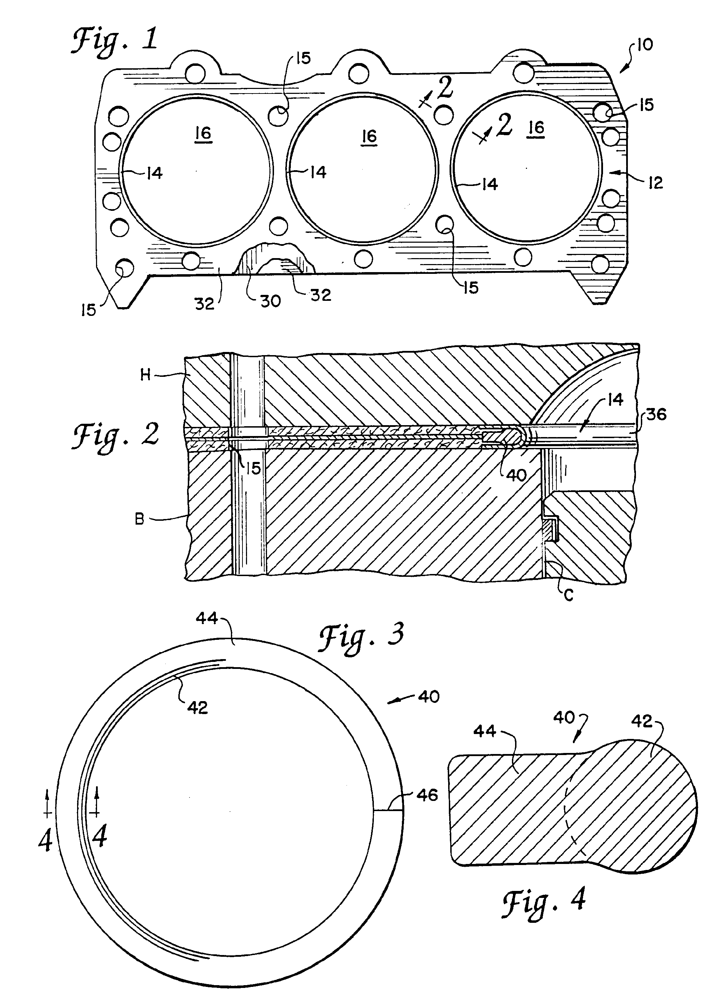

Referring first to Figures 1-4, a head gasket assembly 10 of the present invention is seen to comprise a generally flat main gasket body 12 which defines a plurality of combustion openings 16, suitable oil, water and bolt openings 15, and armoring 14 for the combustion openings 16. In Figure 1 a head gasket assembly 10 having three combustion openings 16 is shown for use in sealing an engine block B having cylinder bores C and a head H (Fig. 2), typically for one side of a V-6 engine.

The main gasket body 12 typically may comprise a laminate, such as of an imperforate or solid metallic core 30, and a pair of facing sheets 32. Core 30 may be a steel core. Facing sheets 32 are of a fiber reinforced composite and are laminated to core 30. The most popular and frequently used facings incorporate glass or other fibers and utilize nitrile, neoprene or polyacrylic elastomers to provide the self-sustaining facings. In the embodiment illustrated, the facings may have a thickness of about 0.381 mm (0.015 inch), although, of course, this may vary with the application. Facing sheets 32 generally resist degradation by oils and coolants, retain torque, minimize extrusion, and exhibit heat resistance.

The main gasket body 12 is die cut or blanked out, such as with a stamping machine, punch press or other suitable form of equipment to provide three combustion openings, bolt holes and a plurality of fluid flow passageways, such as oil and water passageways 15. A typical gasket assembly body having the configuration shown in Figure 1 may have a thickness of about 1.016 mm (0.040 inch). Other configurations and thicknesses may be used depending upon the configuration and requirements of the engines with which the gasket assembly is to be used.

In the embodiment of Figures 1 and 2 armoring 14 is seen to comprise an annular body 36, as of steel, in which a seal ring 40 is positioned. Body 36 is generally U-shaped in cross-section and may be formed about the seal ring 40 in a known and conventional manner. Armor body 36 is disposed to confront the combustion chamber or cylinder bore C in a conventional way. Seal ring 40 is disposed in a usual position occupied by a seal ring, namely closely adjacent to the closed end of the armor body 36, as is seen clearly in Figure 2.

A typical seal ring 40 in accordance with the present invention is shown in enlarged views in Figures 3 and 4. As there shown seal ring 40 comprises a pair of integrally formed annular sections. One section 42 lies radially inwardly of the other section 44. As is clearly seen in Figure 4, section 42 has a greater vertical dimension than section 44. As such, section 42 provides the initial seal when the gasket assembly is compressed. Section 42 is readily deformable and compressible in use to provide a primary sealing force about the combustion opening. When seal section 42 is deformed and compressed substantially to the thickness (to the vertical dimension or height) of the second section 44, the second section resists further compression, in part because of its relative length, hence massiveness, and provides a secondary seal as well. Because it resists further substantial compression, the second section provides substantial stiffness as compared to the first section. As such the seal ring 40 has a multi-stage variable spring rate, as compared to typical round cross-section or other conventional seal rings.

Although round seal rings have typically been formed of drawn wire which is formed into a ring and butt welded, typically special shape wire rings have been formed by machining them. It has been suggested, as in the above-mentioned Pohl patent, that special shape wire rings may also be formed of drawn wire. In the present application the ring seal 40 is preferably formed from wire which is drawn to the cross-sectional configuration shown, and which is then formed into the shape needed, such as the circular shape shown, to circumscribe the cylinder bore. The ends of the wire are preferably cut square and butt connected as by welding or brazing, as at 46, to maintain the integrity of the ring seal 40. Thus manufacture of the ring is efficient and economical, and is not burdened with the special machining and assembly processes used for most special purpose seal rings or with the need for special coining dies or the like.

As seen, the two ring sections 42, 44 merge, one into the other. The highly compressible section 42 is positioned at one end (as viewed in cross-section) and the stiffening section 44 is positioned at the other end. Thus the stiffening second section 44 extends from one side only of the highly compressible section 42 so that each may be positioned at the desired precise relative positions or locations to accomplish the multi-stage sealing. Further, the configuration of the highly compressible section is such that it does not significantly indent the head and block surfaces. Where significant indenting occurs and it is necessary to replace a gasket assembly, the indented block and head surfaces must be refinished to assure effective sealing. That is typically not necessary with the gasket assembly of the present invention. A typical material employed with a seal ring 40 of the present invention may be copper wire which has been annealed at 371.11°C (700°F).

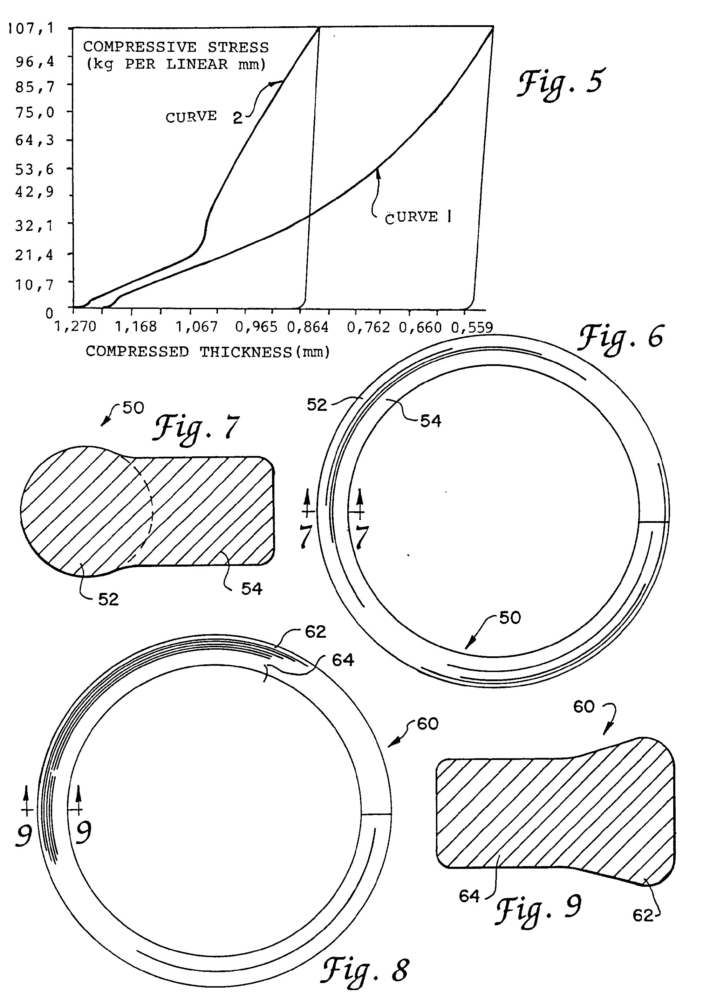

Figure 5 is a load deflection graph comparing the load deflection characteristics of a typical round copper wire having a diameter of 1.1684 mm (0.046 inch) and a seal ring 40 as shown in Figures 3 and 4. The seal ring 40 used has a first section 42 which is generally circular and which has a diameter of 1.2192 mm (0.048 inch). The tab or second section 44 is 1.016 mm (0.040 inch) in thickness and approximately 1.016 mm (0.040 inch) in length as measured from the projection of the circular first section.

As seen in Figure 5 the round wire (curve 1) has a generally continuous gradual load deflection characteristic as the compressive stress increases to a maximum. The two stage seal ring (curve 2) of the present invention has an initial gradually increasing load deflection which parallels that of the round wire, but which then sharply increases during the second stage, i.e., when the first section height or thickness is reduced to that of the second section. Thus, under a given compressive stress, the overall thickness of the seal ring of the present invention remains greater, while producing a highly effective seal.

This has a number of important advantages. For example, thermal push has become an increasingly serious problem. In operation engines heat up. As this occurs, with current engine materials, the head frequently tends to expand and to further compress the gasket and its associated parts, such as wire rings. If a typical round wire is compressed inordinately, its thickness decreases to a point such that when an engine is cold and is started, the wire is ineffective to provide the necessary sealing until the engine again heats up. Blow-by can occur until the engine heats. As a result, the power output of the engine is reduced and damage due to the blow-by can occur. It will be apparent from Figure 5 that the seal ring of the present invention minimizes these deleterious possibilities.

It will be apparent that the seal ring 40 may be used with the armor as shown or, where appropriate or desired, without or outside of an armor in direct confronting engagement with the head and block (or any associated cylinder sleeve). The shape of section 44 lends itself to staking directly to a gasket body.

Although a copper seal ring 40 has been described, other materials, such as steel or bimetallic materials may be used. A typical bimetallic ring may be drawn from a bimetallic strip, such as a copper/steel strip to provide a configuration like that of Figures 3 and 4, with the first circular section (the thicker section) being of copper and the second section being of steel, and the intersection lying generally in the zone of the projection of the dotted line circumference of the circle shown in Figure 4.

The copper seal ring 40 has advantages in many applications, such as when used with aluminum engines where brinnelling, which typically occurs with steel rings, can be avoided. The second stage (second section) provides blow-out strength, the stiffness, radial and hoop strength and minimal relaxation of typical wire rings, and serves as a stopper, but without the deleterious effects of typical steel wires. Indeed, the second stage of Figure 5 is similar to that of a round steel wire. Further the integral nature of the seal ring of the present invention is highly advantageous as compared to prior uses of multi-piece sealing wires, such as two round wires, to provide a seal at a combustion opening. Much closer control is provided and the tolerance variation problems inherent in multi-piece seal assemblies are eliminated.

Other arrangements and configurations of seal rings in accordance with the present invention can be used as well. Thus, for example, Figures 6 and 7 show a seal ring 50 fabricated in a manner similar to that of Figures 4 and 5 and of similar materials, but with the first section 52 and second section 54 reversed. This arrangement moves the primary or initial sealing section 52 outwardly and has the advantage of reducing the bore distortion effect of the seal ring.

In Figures 8 and 9 the shape of the seal section 62 of seal ring 60 has been formed as a wedge shape. Ring 60 may be fabricated in the manner in which the ring 40 is made and may be of the same materials. This offers some self-energizing characteristics and tends to force the primary seal section 62 back towards the secondary seal section 64 under load. That will tend to increase the sealing stress on the seal under engine firing conditions.

Thus it is clear that by changing the geometry and shape factor of the ring sections, the spring rate and other characteristics may be changed to optimize properties, such as, among others, adequate compressibility and blow out resistance, while, however, always gaining the multi-stage variable spring rate characteristics provided by the basic configuration of the present invention. Indeed, although a two-stage ring has been described, it will be apparent that a third stage may be of advantage under some circumstances.

## Claims

1. An automotive head gasket sealing assembly (10) adapted to be disposed between the head (H) and block (B) of an automotive engine, said assembly (10) comprising a generally flat, expansive main gasket body (12) defining at least two combustion openings to be disposed in line with engine combustion chambers (C), and combustion sealing means (14) for each combustion opening (16), each said combustion sealing means (14) comprising a metallic annular seal ring (40) of solid cross-section, said seal ring (40) being formed separately from the gasket body and being positioned within said combustion opening (16) to sealingly circumscribe said combustion chamber (C),
characterized in that
said combustion sealing means is a multi-stage combustion sealing means formed from drawn wire with butt-connected ends and comprising an integral pair of metallic annular seal ring sections (42, 44; 52, 54; 62, 64) of solid cross-section which are positioned within said combustion opening (16) to sealingly circumscribe said combustion chamber (C), one (42; 54; 62) of said metallic annular seal ring sections (42, 44; 52, 54; 62, 64) lying radially inwardly of the other (44; 52; 64), a first ring section (42; 52; 62) being radially deformable and compressible and having a vertical dimension greater than that of a second ring section (44; 54; 64), said first ring section (42; 52; 62) providing an initial compressible seal, said second ring section (44; 54; 64) being less readily deformable and compressible in use and providing both a secondary seal and resistance to thermal push in use.

2. A head gasket sealing assembly in accordance with claim 1, and wherein said first ring section (42) lies radially inwardly of the second section (44) and defines an outer engine contacting surface which is generally curved in radial cross-section.

3. A head gasket sealing assembly in accordance with claim 1, and wherein said first section (62) is generally wedge-shaped in radial cross-section.

4. A head gasket sealing assembly in accordance with claim 1, and wherein said metallic ring sections (42, 44; 52, 54; 62, 64) are formed of copper.

5. A head gasket sealing assembly in accordance with claim 1, and wherein said metallic ring sections (42, 44; 52, 54; 62, 64) are bimetallic.

6. A head gasket assembly in accordance with claim 1, and wherein said first ring section (42; 52) is generally circular in radial cross-section.

7. A head gasket assembly in accordance with claim 1, and further including means (36) for securing said combustion sealing means (14) to said gasket body (12).

8. A head gasket assembly in accordance with claim 7, and wherein said securing means comprises an annular armor body (36) within which said combustion sealing means (40; 50; 60) is positioned and by which said combustion sealing means is secured to said gasket body (12).

## Patentansprüche

1. Zylinderkopfabdichtung (10) zur Anordnung zwischen dem Kopf (H) und Block (B) einer Brennkraftmaschine eines Kraftfahrzeugmotors, wobei die genannte Dichtung (10) einen im allgemeinen ebenen, dehnbaren Hauptdichtungskörper (12) mit mindestens zwei Verbrennungsöffnungen zur fluchtenden Anordnung mit Verbrennungskammern (C) des Motors sowie Dichtungen (14) für jede Verbrennungsöffnung (16) umfaßt, wobei jede der genannten Dichtungen (14) aus einem metallischen, ringförmigen, im Querschnitt massiven Dichtungsring (40) besteht und der genannte Dichtungsring (40) getrennt von dem Dichtungskörper gebildet ist und innerhalb der Verbrennungsöffnung (16) angeordnet ist, um die genannte Verbrennungskammer (C) in ihrer Umfangsrichtung abzudichten,
dadurch gekennzeichnet, daß
die Verbrennungskammerdichtung eine Mehrstufendichtung ist, die aus gezogenem Draht mit stumpf verbundenen Enden geformt ist und ein integrales Paar metallischer, ringförmiger Dichtungsringabschnitte (42, 44; 52, 54; 62, 64) massiven Querschnitts umfaßt, die innerhalb der Verbrennungsöffnung (16) positioniert sind, um die genannte Verbrennungskammer (C) in Umfangsrichtung abzudichten, wobei einer (42; 54; 62) der genannten metallischen, ringförmigen Dichtungsringabschnitte (42, 44; 52, 54; 62, 64) radial innerhalb des anderen (44; 52; 64) liegt, ein erster Ringabschnitt (42; 52; 62) radial verformbar und kompressibel ist sowie eine vertikale Abmessung hat, die größer als diejenige eines zweiten Ringabschnitts (44; 54; 64) ist, wobei der erste Ringabschnitt (42; 52; 62) eine anfängliche, kompressible Dichtung darstellt und der genannte zweite Ringabschnitt (44; 54; 64) im Betrieb weniger leicht verformbar und kompressibel ist und wobei beide eine zweite Dichtung und eine Widerstandsfähigkeit gegenüber einem im Betrieb auftretenden Wärmestau aufweisen.

2. Zylinderkopfabdichtung nach Anspruch 1, wobei der erste Ringabschnitt (42) radial innerhalb des zweiten Abschnitts (44) liegt und eine äußere, den Motor berührende Fläche bildet, die im radialen Querschnitt im allgemeinen gekrümmt ist.

3. Zylinderkopfabdichtung nach Anspruch 1, wobei der erste Abschnitt (62) im radialen Querschnitt im allgemeinen keilförmig ist.

4. Zylinderkopfabdichtung nach Anspruch 1, wobei die genannten metallischen Ringabschnitte (42, 44; 52, 54; 62, 64) aus Kupfer geformt sind.

5. Zylinderkopfabdichtung nach Anspruch 1, wobei die genannten metallischen Ringabschnitte (42, 44; 52, 54; 62, 64) bimetallisch sind.

6. Zylinderkopfabdichtung nach Anspruch 1, wobei der erste Ringabschnitt (42; 52) im radialen Querschnitt im allgemeinen kreisförmig ist.

7. Zylinderkopfabdichtung nach Anspruch 1, welche eine Vorrichtung (36) zur Befestigung der Verbrennungskammerabdichtung (14) an dem Dichtungskörper (12) umfaßt.

8. Zylinderkopfabdichtung nach Anspruch 7, wobei die Befestigungsvorrichtung aus einem ringförmigen Armierungskörper (36) besteht, innerhalb welchem die Verbrennungskammerabdichtung (40; 50: 60) positioniert ist und durch welche die Verbrennungskammerabdichtung an dem Dichtungskörper (12) befestigt ist.

## Revendications

1. Ensemble d'étanchéité (10) pour joint de culasse de moteur d'automobile, adapté pour être interposé entre la culasse (1) et le bloc (2) d'un moteur d'automobile, ledit ensemble (10) comprenant un corps principal (12) du joint, de forme générale plate, expansible, définissant au moins deux ouvertures de combustion destinées à être disposées en ligne avec les chambres de combustion (C) du moteur, et un moyen (14) d'étanchéité de combustion pour chaque ouverture de combustion (16), chacun desdits moyens d'étanchéité de combustion (14) comprenant une bague d'étanchéité annulaire métallique (40) de section massive, ladite bague d'étanchéité (40) étant formée séparément du corps du joint et étant positionnée dans ladite ouverture de combustion (16) de façon à circonscrire hermétiquement ladite chambre de combustion (C),
caractérisé en ce que
ledit moyen d'étanchéité de chambre de combustion est constitué par un moyen d'étanchéité de combustion à étages multiples formé en fil étiré dont les extrémités sont assemblées bout à bout, et comprend une paire intégrée de parties de bague d'étanchéité annulaire métallique (42, 44 ; 52, 54 ; 62, 64) de section massive qui sont positionnées dans ladite ouverture de combustion (16) pour circonscrire hermétiquement ladite chambre de combustion (C), l'une (42 ; 54 ; 62) desdites parties (42, 44 ; 52, 54 ; 62, 64) des bagues d'étanchéité annulaires métalliques se trouvant radialement à l'intérieur de l'autre (44 ; 52 ; 64), une première partie (42 ; 52 ; 62) de la bague étant radialement déformable et compressible et ayant une dimension verticale supérieure à celle d'une seconde partie (44 ; 54 ; 64) de la bague, ladite première partie (42 ; 52 ; 62) de la bague formant une garniture d'étanchéité compressible initiale, ladite seconde partie (44 ; 54 ; 64) de la bague étant moins facilement déformable et compressible en utilisation et formant à la fois une garniture d'étanchéité secondaire et un élément de résistance à la poussée thermique en utilisation.

2. Ensemble d'étanchéité pour joint de culasse selon la revendication 1, dans lequel ladite première partie (42) de la bague se trouve radialement à l'intérieur par rapport à la seconde partie (44) et définit une surface extérieure de contact avec le moteur qui est de forme générale courbe en section radiale.

3. Ensemble d'étanchéité pour joint de culasse selon ta revendication 1, dans lequel ladite première partie (62) présqente la forme générale d'un coin en section radiale.

4. Ensemble d'étanchéité pour joint de culasse selon la revendication 1, dans lequel lesdites parties de bague métalliques (42, 44 ; 52, 54 ; 62, 64) sont en cuivre.

5. Ensemble d'étanchéité pour joint de culasse selon la revendication 1, dans lequel lesdites parties de bague métalliques (42, 44 ; 52, 54 ; 62, 64) sont bi-métalliques.

6. Ensemble de joint de culasse selon la revendication 1, et dans lequel ladite première partie (42 ; 52) de bague est de forme générale circulaire en section radiale.

7. Ensemble de joint de culasse selon la revendication 1, comprenant en outre des moyens (36) servant à fixer lesdits moyens d'étanchéité de combustion (14) audit corps (12) du joint.

8. Ensemble de joint de culasse selon la revendication 7, et dans lequel lesdits moyens de fixation comprennent un corps d'armure annulaire (38) à l'intérieur duquel ledit moyen d'étanchéité de combustion (40 ; 50 ; 60) est positionné et par lequel ledit moyen d'étanchéité de combustion est fixé audit corps (12) du joint.
